(19)

Europäisches
Patentamt
European
Patent Office
Office européen
des brevets

(11)     **EP 1 387 544 B1**

(12)                     **EUROPEAN PATENT SPECIFICATION**

(45) Date of publication and mention
of the grant of the patent:
**07.11.2007 Bulletin 2007/45**

(51) Int Cl.:
*H04L 27/26* *(2006.01)*

(21) Application number: **03254264.9**

(22) Date of filing: **04.07.2003**

(54) **Synchronisation in multicarrier receivers**

Synchronisierung in Mehrträgerempfängern

Synchronisation dans des récepteurs multiporteuses

(84) Designated Contracting States:
**BE DE FR IT**

(30) Priority: **05.07.2002 GB 0215639**

(43) Date of publication of application:
**04.02.2004 Bulletin 2004/06**

(60) Divisional application:
**06077076.5 / 1 755 300**

(73) Proprietor: **BRITISH BROADCASTING
CORPORATION
London W1A 1AA (GB)**

(72) Inventors:
• **Elliott, John Edward,
British Broadcasting Corp.
Tadworth,
Surrey KT20 6NP (GB)**
• **Stott, Jonathan H.,
British Broadcasting Corp.
Tadworth,
Surrey KT20 6NP (GB)**

• **Haffenden, Oliver Paul,
British Broadcasting Corp.
Tadworth,
Surrey KT20 6NP (GB)**

(74) Representative: **Abnett, Richard Charles
REDDIE & GROSE
16 Theobalds Road
London WC1X 8PL (GB)**

(56) References cited:
**EP-A- 0 653 858          EP-A- 0 730 357
EP-A- 0 836 304          EP-A- 0 896 457
EP-A- 0 901 260          EP-A- 0 903 897
EP-A- 1 071 279          EP-A- 1 206 096
EP-A- 1 283 614          WO-A-01/65794
WO-A1-97/26742         GB-A- 2 325 125
US-A- 5 848 107          US-A1- 2002 065 047**

• **XIANMING LI ET AL.: "A difference method of the
gravity center with double pilots for the MC-
CDMA system" IEEE ASIA-PACIFIC
CONFERENCE ON CIRCUITS AND SYSTEMS, 4
December 2000 (2000-12-04), - 6 December 2000
(2000-12-06) pages 25-29, XP010537538 New
York, US**

Printed by Jouve, 75001 PARIS (FR)

**Description**

BACKGROUND OF THE INVENTION

This invention relates to receivers for Orthogonal Frequency Division Multiplex (OFDM) signals.

The use of OFDM has been proposed for a number of systems including the DVB-T (Digital Video Broadcasting - Terrestrial), DAB (Digital Audio Broadcasting) also known as DSB (Digital Sound Broadcasting), and DRM (Digital Radio Mondiale) systems. A DVB-T receiver is described in our European Patent Application 02250062.3, publication EP-A-1221793, and the DVB-T system is defined in European Telecommunications Standard ETS 300 744. The DRM system is described in ETSI Technical Specification TS 101 980 V1.1.1 (2001-9) available from ETSI, 650 Ronte des Lucioles, F-06921 Sophia Antipolis, France (the DRM standard). A briefer description of the DRM system is given in EBU Technical Review, March 2001, DRM-Key technical features, Jonathan Stott.

Both DVB-T and DRM use coded OFDM (COFDM), which is a many-carrier system in which interference is spread over many carriers by the use of a time domain/frequency domain transformation which is effected e.g. by a fast Fourier transform (FFT) circuit. In the OFDM system, instead of transmitting the digital binary bits sequentially on a single carrier, they are assembled and transmitted simultaneously on a large number of closely-spaced carriers, in the hundreds or thousands. In this way each bit can be transmitted for much longer by a factor of hundreds or thousands. The bits are transmitted in parallel on the many carriers in a succession of symbol periods, each symbol period transmitting one bit or a plurality of bits on each carrier.

The duration of each symbol, the total symbol period $T_s$, is made up of an active or useful symbol period $T_u$ and a guard interval $T_g$. The spacing between adjacent carriers is the reciprocal of the active symbol period, thus satisfying the condition for orthogonality between the carriers. The guard interval is a predefined fraction of the active symbol period, and contains a cyclic continuation of the active symbol.

Time synchronisation of the receiver with the received signal is essential for proper decoding of COFDM. DRM uses COFDM in the AM bands (i.e. below 30MHz) which brings new challenges for time synchronisation. It is known that the channels likely to be encountered in the AM bands may have many paths and large delay spreads as well as Doppler shifts and spreads. Any time synchronisation method used for DRM must be able to deal with these types of channel and, moreover, should try to ensure that as much of the energy in the channel as possible is placed within the allowed timing window to minimise inter-symbol interference (ISI).

In OFDM, at baseband the first carrier each side of the DC carrier comprises one complete cycle. The next carrier comprises two cycles and so on. It is this relationship that ensures there is no inter-carrier interference (ICI); that is it defines the orthogonality condition of OFDM. It is important that the sample rate at the transmitter and receiver are the same, otherwise the duration of one cycle of a carrier will be different between the receiver and transmitter, breaking the orthogonality of the signal. A demodulator must also ensure that it captures all of the useful part of the symbol to satisfy the OFDM criterion. If it captures too much it will include some of either the previous symbol or the next symbol, and inter-symbol interference (ISI) will result.

The OFDM parameters for DRM are summarised in Table 1.

Table 1: Summary of the OFDM parameters in DRM

| Robustness mode | Duration $T_u$ | Carrier spacing $1/T_u$ | Duration of guard interval $T_g$ | Duration of symbol $T_s = T_u + T_g$ | FFT size | $T_g/T_u$ |
|---|---|---|---|---|---|---|
| A | 24ms | $41^2/_3$ Hz | 2.66ms | 26.66ms | 288 | 1/9 |
| B | 21.33ms | $46^7/_8$ HZ | 5.33ms | 26.66ms | 256 | 1/4 |
| C | 14.66ms | $68^2/_{11}$ Hz | 5.33ms | 20.00ms | 176 | 4/11 |
| D | 9.33ms | $107^1/_7$ Hz | 7.33ms | 16.66ms | 112 | 11/14 |

Time synchronisation is thus essential in any digital receiver. The synchronisation can be considered as being in two parts:

(i) Synchronisation of the receiver clock (i.e. the sampling frequency) with the received signal (i.e. the transmitter clock).
(ii) Synchronisation of the timing window of the receiver to the symbol boundaries (i.e. phase).

Thus the receiver needs to be able to measure the error in (i) the sampling frequency and (ii) the symbol position, and to have some means of correcting any such error.

In OFDM, the guard interval allows the system to tolerate multipath interference effects. The addition of the guard interval, of duration $T_g$, to the OFDM symbol means there is a tolerance equal to the duration of the guard interval in the window position for a single path. If there is multipath interference, the total delay spread can be as much as a guard interval without causing ISI, assuming that the entire channel is placed within this window. Even if there is energy outside the guard interval, so long as it is at a low level the error correction coding in the decoder should deal with this.

The time synchronisation systems used with DAB and DVB-T may not be optimal for the channels encountered below 30MHz used by DRM. These channels are likely to be very different, with a much larger delay spread and Doppler shifts, and generally to be more dynamic (rapidly varying). Therefore the receiver may have a harder job both in acquiring time synchronisation and in maintaining it. As the decoder will have a hard enough job anyway it is important to reduce as much as possible both inter-symbol interference (ISI) and inter-carrier interference (ICI). It is also desirable for the receiver to lock to the incoming stream as quickly as possible.

United States Patent Application 2002/0065047 describes a WLAN OFDM receiver which includes digital synchronization circuitry having a delay of the useful symbol period and a cross-correlator for correlating the delayed and undelayed received signal. A peak detector then detects a peak in the correlator output. European Patent Application 896457 describes a DAB OFDM receiver which includes synchronization circuitry having a delay of the useful symbol period and a correlation circuit to provide a complex correlation of the delayed and undelayed received signal. Argument values of the resultant are then determined. A detection circuit then detects transitions between regions of random phase and those of constant phase.

## SUMMARY OF THE INVENTION

The invention in its various aspects is defined in the independent claims below, to which reference should now be made. Advantageous features are set forth in the appendant claims.

A preferred embodiment of the invention is described in more detail below with reference to the drawings. Briefly, the preferred embodiment takes the form of a receiver which has a pre-FFT time synchronisation algorithm, which is used to synchronise the receiver to the incoming symbols to a reasonable level of accuracy, before handing over to a post-FFT time synchronisation algorithm. The pre-FFT algorithm generates a number of waveforms which are used to detect the presence and location of the guard interval. The data before the FFT can be used to obtain relatively crude time and frequency synchronisation, and then decision logic is used to switch to using the post-FFT algorithms.

The pre-FFT synchroniser delays the signal by the duration of the appropriate active symbol period, correlates the delayed and undelayed signals to provide a correlation signal representing the result of the correlation, and detects the centre of mass of the pulses in the correlation signal, to provide a synchronisation signal.

## BRIEF DESCRIPTION OF THE DRAWINGS

The invention will now be described in more detail, by way of example, with reference to the drawings, in which:

**Figure 1** is a block diagram of the pertinent part of a DRM receiver;
**Figure 2** is a more detailed block diagram showing the pre-FFT and post-FFT synchronisers in more detail;
Figure 3 is a diagram showing the result of correlating an OFDM signal with the same signal when delayed by the active symbol period;
**Figure 4** is a more detailed diagram showing an example of the time correlator and filter in the pre-FFT synchroniser of Figure 2;
**Figure 5** is a diagram illustrating the smoothed and filtered output from the pre-FFT synchroniser when the delay in the correlator is equal to the active symbol period currently in use;
**Figure 6** is a diagram illustrating the output of the smoother in the pre-FFT synchroniser when the receiver receives a signal containing two paths of equal magnitude (i.e. a 0dB echo);
**Figure 7** is an idealised waveform from the smoother when the guard interval is in the desired position;
**Figure 8** is a diagram illustrating the decrease in useful voltage for paths outside the guard interval;
**Figure 9** is a diagram illustrating the wanted and unwanted power for paths outside the guard interval;
**Figure 10** is a diagram illustrating a method of determining the width of the minimum region;
**Figure 11** illustrates the 'damage' waveform for a 0dB echo with a delay of a guard interval; and
**Figure 12** illustrates the 'damage' waveform for a 0dB echo with a delay greater than a guard interval.

## DETAILED DESCRIPTION OF THE PREFERRED EMBODIMENT

An embodiment of the invention will now be described with reference to the drawings.

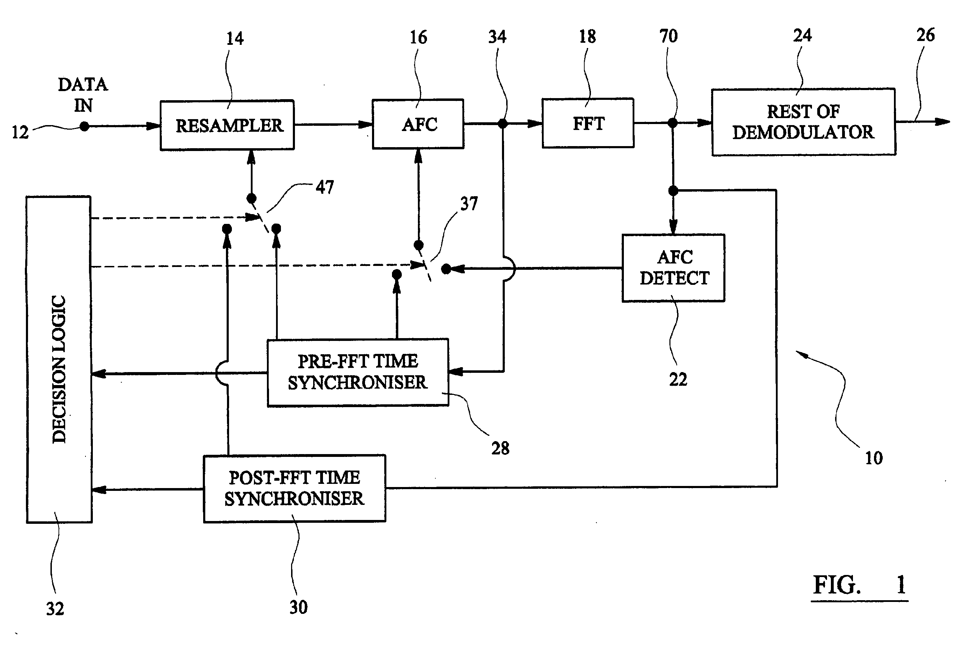

Figure 1 is a schematic block diagram of the relevant part of a DRM receiver embodying the invention. The circuit 10 of Figure 1 has a data input 12 which receives the received DRM signal after it has been demodulated to baseband. This signal is applied to a resampler 14 which samples the signal at a controlled rate and timing. The output of the resampler is applied to an AFC circuit (automatic frequency corrector) 16 which corrects for minor frequency errors, and thence the signal is applied to a fast Fourier transform (FFT) circuit 18, which operates to decode the OFDM coded signal. The output of the FFT circuit is applied to an AFC detect circuit 22 which detects any frequency error in the decoded signal and which in turn supplies a control input to the AFC circuit 16. The AFC circuit 16 is a standard complex multiplier and the detect circuit 22 is based on a differential demodulator. Finally the output of the FFT 18 is also applied to the rest of the demodulator, indicated by reference 24 on Figure 1, and which provides an output 26. For further details of the DRM receiver, reference should be made to the DRM standard as referred to above.

The circuit as shown in Figure 1 employs a resampler 14. An alternative to this would be to use a voltage controlled crystal oscillator (VCXO) to lock the receiver to the incoming data stream. If a resampler is used, then the basic sampling frequency of the DRM specification is 12kHz when a spectral occupancy of 10kHz is used, or 24kHz for a spectral occupancy of 20kHz. Therefore the DRM receiver can run at a 50kHz sampling frequency, and the resampling circuit applies a nominal 2 to 1 down-sampling factor, to give samples at 25kHz. This down-sampling factor is controllable, within limits, so that a down-sampling factor of more than 2 to 1 is possible. In this way the required 24ks/s (kilo-samples per second) sample rate can be achieved. The time synchronisation algorithm must then provide the correct control signal to the resampling circuit to ultimately achieve symbol synchronisation.

The circuit of Figure 1 additionally includes a pre-FFT synchroniser 28 and a post-FFT synchroniser 30. The pre-FFT synchroniser receives as an input the output 34 of the AFC circuit 16 and provides an output to decision logic 32. The post-FFT synchroniser 30 receives as an input the output 70 of the FFT circuit 18 and also provides an output to decision logic 32. The decision logic 32 provides control signals to switches represented on Figure 1 as switches 37 and 47. Switch 37 selects either the output of the pre-FFT synchroniser 28 or the output of the find frequency error circuit 22 for use as a timing control signal to the frequency corrector 16. Switch 47 selects either the output of the pre-FFT synchroniser 28 or the output of the post-FFT synchroniser 30 for use as a timing control signal to the resampler 14.

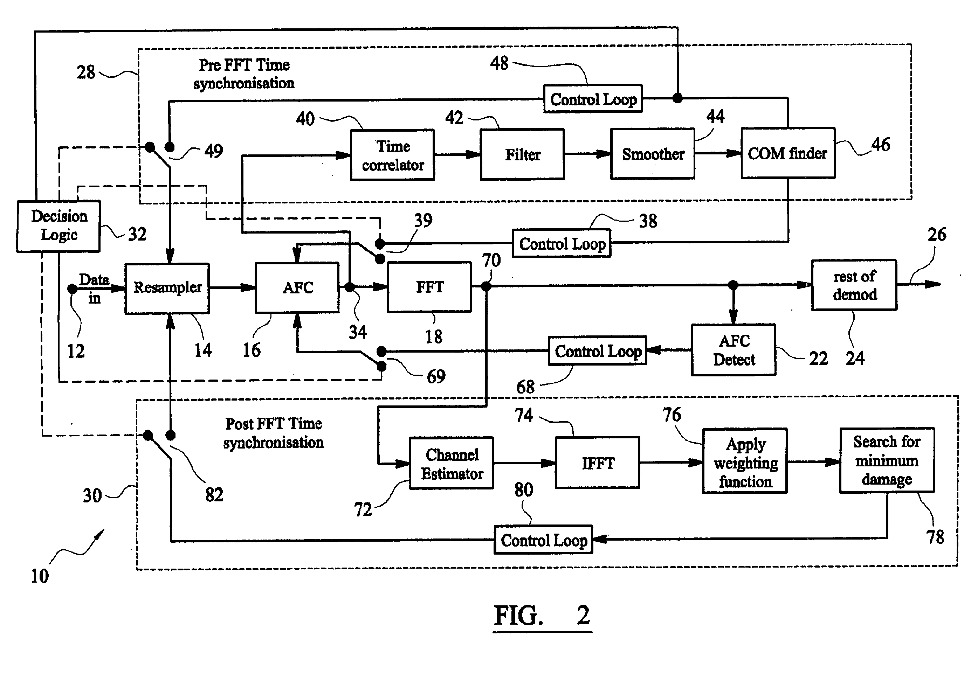

The structure of the pre-FFT synchroniser 28 and the post-FFT synchroniser 30 is shown in more detail in Figure 2. The pre-FFT synchroniser 28 has an input which is connected to the output 34 of the AFC circuit 16. The pre-FFT synchroniser 28 then comprises a timing correlator 40, a filter 42, a smoother 44, and a centre-of-mass (COM) finder circuit 46 connected in series. A DC restorer circuit may optionally be included between the smoother 44 and the COM finder circuit 46. The output of the COM finder 46 is connected as a control input to the decision logic 32. The output of the COM finder 46 is also applied though a control loop 48 and a switch 49 to control the timing of the resampler 14. That is, switch 49 forms one half of switch 47 shown on Figure 1. Finally the output of the COM finder 46 is also applied though a control loop 38 and a switch 39 to control the timing of the frequency corrector 16. That is, switch 39 forms one half of switch 37 shown on Figure 1. The control loop 38 may comprise a circuit which finds the phase angle of the signal from its real and imaginary components to provide a degree of phase correction. An output from the find frequency error circuit 22 is also applied though a control loop 68 and a switch 69 to control the timing of the frequency corrector 16. That is, switch 69 forms the other half of switch 37 shown on Figure 1.

If desired, filters can be included at the output of the AFC circuit 16 in the main signal path and/or at the input to the pre-FFT synchronizer 28. For example, a channel filter and/or a DC filter can be included in the signal path, and a notch filter included at the input to the mode detector to remove interfering signals.

The post-FFT synchroniser 30 has an input which is connected to the output 70 of the FFT circuit 18. The post-FFT synchroniser then comprises a channel estimator circuit 72, an inverse fast Fourier transform circuit (IFFT) 74, a circuit 76 for applying a weighting function, and a circuit 78 for searching for minimum damage, connected in series. The function of these circuits is described in more detail below. The output of the minimum damage search circuit 78 is applied though a control loop 80 and a switch 82 to control the timing of the resampler 14. That is, switch 82 forms the other half of switch 47 shown on Figure 1.

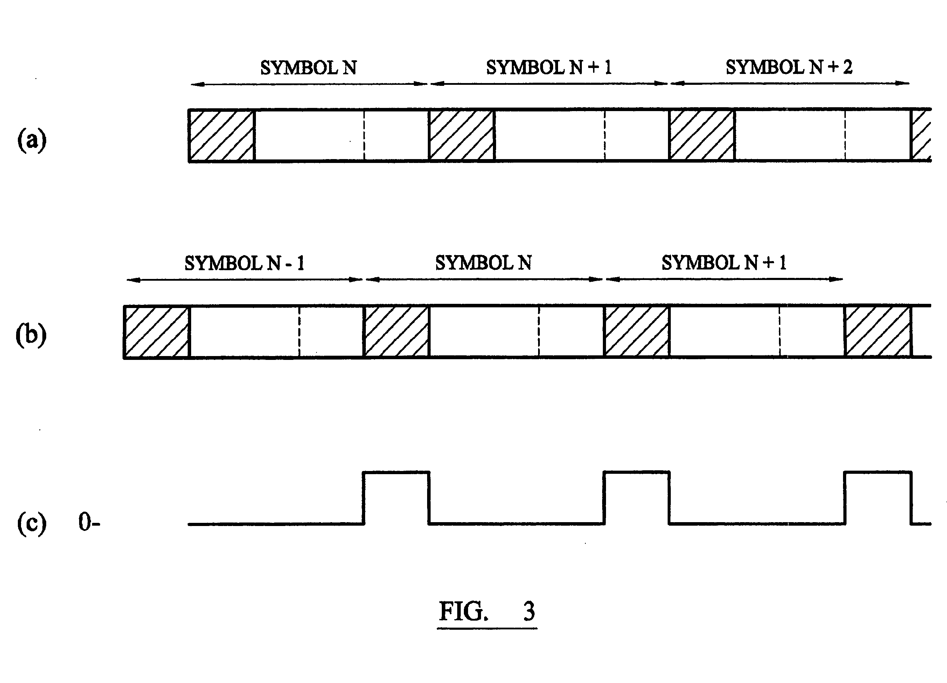

The theory of the operation of the pre-FFT synchroniser will first be described with reference to Figure 3. At (a) in Figure 3 is shown a received signal from the resampler 14 for three symbol periods N, N + 1, N + 2, .... The figure shows for each symbol period the guard interval, which is hatched, and the active symbol period which forms the rest of the total symbol period. The guard interval comes first and is a cyclic continuation of the last part of the active symbol period. That is, the guard interval and the corresponding last part of the active symbol period are identical. Waveform (b) in Figure 3 shows the same signal as at (a) but where the signal has been delayed relative to the signal at (a) by a duration equal to the active signal period. If the waveforms (a) and (b) are correlated, then the resultant will be substantially the waveform at (c), any noise being ignored for the moment. It will be seen that the guard interval for, say, symbol N in (a) is co-timed with the last part of the active symbol period for symbol N in (b). Waveform (c), therefore, has a pulse in this region but elsewhere there is no correlation between (a) and (b), and accordingly the waveform (c) takes a zero value.

In mathematical terms an OFDM signal S can be considered to have a zero mean with some variance $\sigma^2/2$ on

both the real and imaginary axes. Points from the same symbol, when correlated, will have a mean value given by:

$$\overline{SS^*} = \sigma^2$$

In fact, because, in general, any frequency error may not have been taken into account, there will be an extra factor, so the above equation becomes:

$$\overline{SS^*} = \sigma^2 e^{-j\omega_0 T_S}$$

where $\omega_0$ is the frequency error. Points from different symbols, when correlated, will have a zero mean value.

A real signal from such a correlator can not be used directly because it does not have the form shown in Figure 3 at (c) but rather has a widely fluctuating waveform which needs to be filtered to reveal the underlying pulse shape more clearly. This filtering is achieved with a recursive Infinite Impulse Response (IIR) filter. Thus the pre-FFT synchroniser 28 contains a correlator 40 followed by a filter 42.

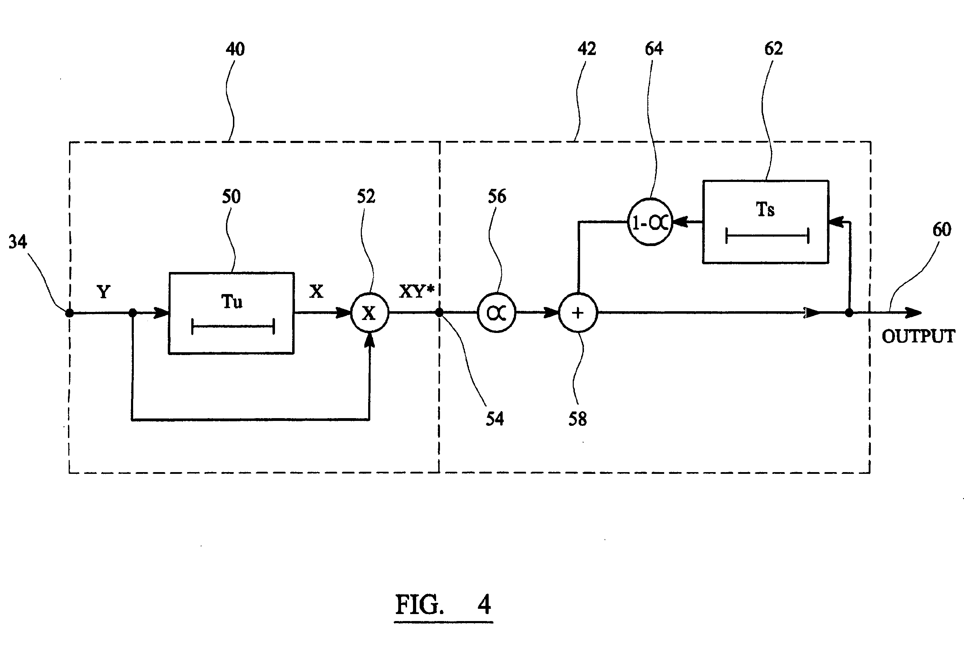

The correlator 40 and filter 42 are shown in more detail in Figure 4. The correlator has an input connected to the input 34 to the pre-FFT synchroniser 28. The correlator contains a delay 50 providing a delay time equal to the active or useful symbol period $T_u$. A multiplier 52 has two inputs, one X of which is connected to the output of the delay 50 and the other Y of which is connected to the input 34. The multiplier 52 is a complex multiplier which takes the complex conjugate of one of the inputs applied to it. As shown the multiplier generates the output XY*, that is X multiplied by the complex conjugate of Y, but it could equally be X*Y.

The filter 42 is also constructed as shown in Figure 4. The output 54 of the correlator 40 forms the input to the filter 42 and is applied to a multiplier or attenuator 56 where it is multiplied by a coefficient $\alpha$ where $0<\alpha<1$. The resultant of this multiplication is then applied to one input of an adder 58. The output of the adder 58 is applied both as the output 60 of the filter 42 and to the input of a delay 62 with provides a delay period equal to the total symbol period $T_s$. The delayed signal is then multiplied by a factor $1-\alpha$ in a multiplier 64, the output of which is applied to the other input to the adder 58. This type of recursive filter is of itself well-known.

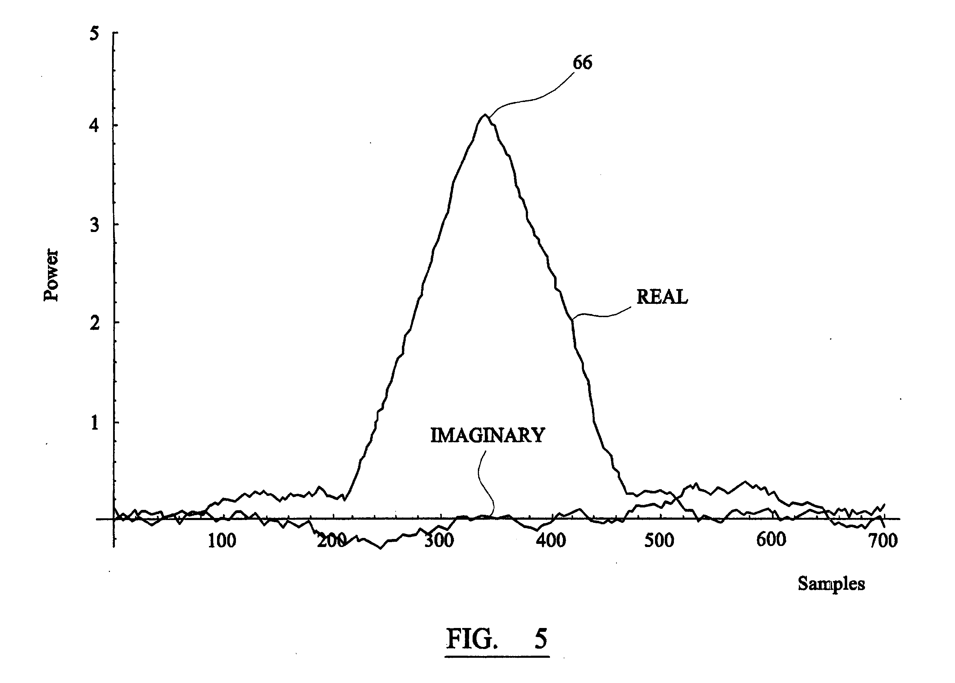

Referring again to Figure 2, after the filter 42 there is a smoother 44. The smoother consists of a window with a width measured in samples equal to the length or duration of the guard interval. This window takes a rolling average of the waveform and produces a substantially triangular waveform as shown in Figure 5. The imaginary component of the waveform is substantially zero when the frequency error has been corrected. However the real component has a distinct peak 66, here shown at about 350 samples. This peak denotes the end of the guard interval, assuming that a single path is involved, i.e. no multi-path interference.

The operation of the pre-FFT Time Synchroniser will now be described. It will be appreciated that any process applied to the signal before the FFT 18 is inherently noisy, as the COFDM signal will look like noise, even before the effects of thermal and other sources of noise are added. So, for example, a correlation of this noisy signal with itself gives rise to an even noisier signal. This ultimately limits the accuracy of what can be achieved with the pre-FFT signal.

To summarise, as described above, in the time correlator 40 the incoming symbol is first correlated with itself (by taking the conjugate product) across a delay of the useful symbol length. Some filtering is applied to this using the recursive IIR filter 42. This is then smoothed in smoother 44 with a 'top hat' response, with a width equal to the guard interval, to give a waveform similar to Figure 5.

From this the peak 66 is now found, the location of which occurs at the end of the guard interval. This position is fed into the loop filter 48 so that eventually a complete symbol is in an input buffer which controls the resampler 14 so that samples from a single symbol are applied to the FFT 18. The loop filter 48 has a bandwidth which limits how fast the timing position can move.

At the beginning of the acquisition of synchronisation, the window position could be incorrect by half a symbol period, which would take too long to move to the correct position. To speed this process up, the receiver can make a "jump" to the correct position by throwing away some samples. A confidence counter is used to ensure the peak appears in a consistent position before making the jump. The phase angle error can also be determined from this waveform.

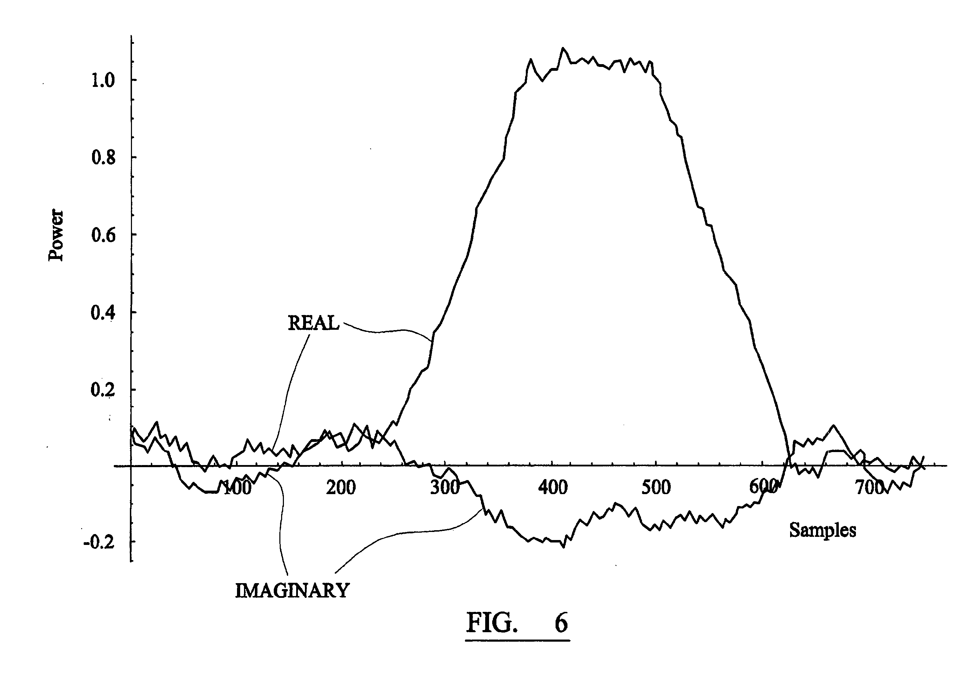

However, this technique has a problem with a noisy waveform, with a 0dB or zero decibel echo (interference of equal magnitude to the desired signal), or with a changing channel. A 0dB echo would give a waveform similar to Figure 6. In the absence of noise, this waveform would have a "flat top". With noise the exact peak can move by a large amount from symbol to symbol. Similarly for a noisy waveform or changing channel the position of the peak will be different from symbol to symbol.

A time synchronisation method is therefore required that overcomes these problems just noted above. Also the pre-FFT time synchroniser 28 and post-FFT time synchroniser 30 should preferably work in a similar way, so that hand over from one to the other can occur smoothly. In principle, the pre-FFT time synchroniser 28 only needs to get to within a certain position of the ideal, as the post-FFT time synchroniser 30 will be able to determine the ideal position more accurately. However, as described below, the post-FFT time synchronisation uses the output from the channel estimator 72, which is band limited. Therefore it is not possible for it to move the timing window quickly, otherwise the output from the channel estimator is upset. So to ensure a quick lock-up it is preferable that the pre-FFT time synchroniser gets as close as possible to the ideal position, and the post-FFT time synchroniser then fine tunes the position and tracks the changing channel thereafter. Thus the two synchronisers 28 and 30 co-operate in this way to provide improved timing synchronisation for the receiver.

The method employed in the preferred embodiment described and illustrated takes into account the delay spread of the channel and attempts to place all or at least the largest part of the channel energy into the window. A "centre of mass" technique is applied to the output of the smoother 44 by the COM finder circuit 46. The smoother waveform contains information about the delay spread and the energy distribution of the channel, and thus the method can take into account the delay spread of the channel.

The "centre of mass" is a form of weighted average. The usual method of finding the centre of mass (COM) of an object is by integrating the "mass" and the "moment of mass" across the object from a reference point. In the present instance there are discrete samples and the reference point can be chosen as the start of the array used to store the sampled signal. The distance of the COM in sample points from the start of the array can then be calculated as:

$$COM = \frac{\sum x_i i}{\sum x_i}$$

Here $i$ is the index into the data array (the values on the x-axis of Figure 6) and $x_i$ is the value in the array (the values on the y-axis of Figure 6).

In summary, the pre-FFT synchroniser seeks to determine the best window position by following these steps:

1. Applying a time correlation to the incoming data to reveal the location of the guard interval.
2. Filtering this correlated signal to show the guard interval more clearly.
3. Smoothing this filtered signal to give a triangular pulse.
4. Finding the centre of mass of this pulse, and using this position as the input to the loop filter.

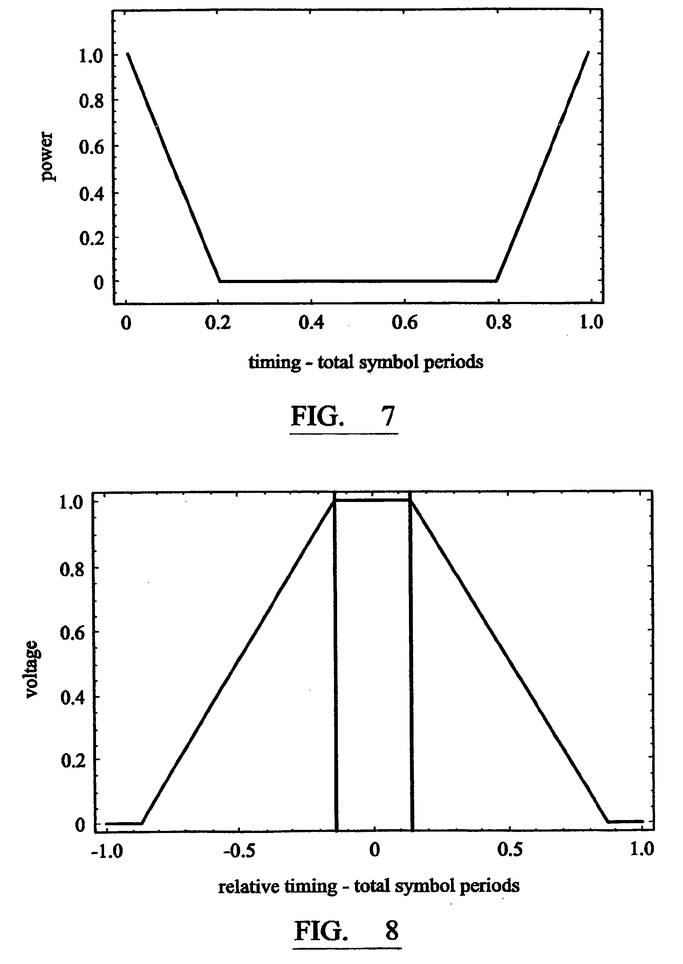

A problem can arise with this technique which may be termed "wrap around". To illustrate this, a situation may be considered where the end of the guard interval is on the edge of the acquired symbol boundary, that is exactly the situation that is desired. Applying the correlation and filtering gives a waveform similar to the somewhat idealised waveform shown in Figure 7. The 'real' COM of this waveform is at the very beginning of the data array. However, applying the above equation would give a result where the COM is in the middle of the acquired symbol i.e. half a symbol away from where it actually is.

To overcome this problem, the symbol data can be split into two halves and the COM found for each half. For the signal shown in Figure 7, the COM of the first half of the data is near the beginning of the array, and the COM of the second half is near the end of the array. This indicates that wrap around exists. However, by combining the two positions, the real position of the COM can be found.

We have found that when using such an arrangement for a noisy input signal, the COM position tends to move around from symbol to symbol. This is particularly so if the guard interval is near the beginning of the data array. This arises because noise at the end of the array has a large moment of mass, and pulls the COM to the right in Figure 7. To reduce this problem the COM can be recalculated a second time. The first value using the whole of the array is then used to determine where to place a window for the second calculation. The total width of the window is the guard interval plus a small amount sufficient to allow for errors in the original estimate. This windowing method eliminates a large part of the noise contribution to the COM and gives an improved estimate.

The post-FFT time synchroniser 30 will now be described. As the signal is less noise-like after it has been through the FFT 18, any algorithm working on this data should give cleaner results.

The demodulator has to calculate an estimated channel frequency response (channel estimate) so that it is able to correct the effects of the channel on the individual carriers. The channel estimator uses the pilot carriers (sometimes referred to as gain references) which are placed in the signal for this purpose. The channel estimation shows which carriers have been attenuated or boosted because of the effects of the channel.

The post-FFT time synchroniser uses the output of this channel estimator, shown in Figure 2 at 72, which is in the frequency domain. An FFT operation, or to be strictly accurate an inverse FFT (IFFT) operation, is performed on these data to give an estimated channel impulse response in the time domain. The magnitude of the output of the IFFT is then squared (in the circuit 74) to give an estimate of the power channel impulse response (PIR). This gives a useful representation of the behaviour of the channel in the time domain.

It can also be used to calculate where best to place the timing window. This requires the extra processing overhead of the FFT 74 and any other processing that is required, but the optimum placing of the timing window is important to get the best performance out of the receiver.

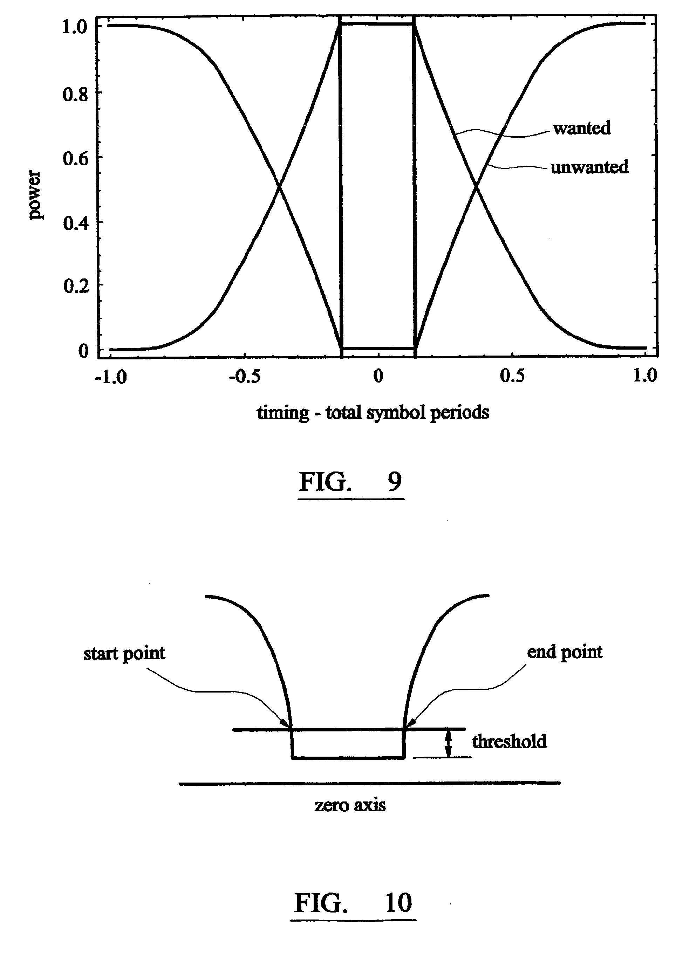

The preferred post-FFT time synchroniser system illustrated in Figure 2 will now be described. By way of background, it will be appreciated that all paths falling within the guard-interval wide window contribute only useful power. We have appreciated that paths falling outside the guard-interval wide window contribute both useful and unwanted power; these paths represent ISI. That is, these paths contribute positively as well as destructively. The paths contribute a substantially linear decrease in wanted voltage as they move outside the guard interval as shown in the diagram of Figure 8. This gives a quadratic decrease in useful power as shown in Figure 9, and also gives a quadratic increase in unwanted power. We have appreciated that this can be used as a weighting function along with the PIR so as to calculate what damage will be done when the PIR is placed at each possible position. What is more, using such a quadratic function make the optimum use of the paths falling outside the window.

This is achieved simply by multiplying the weighting function and PIR together at each possible position. This gives a new waveform which shows the damage done against timing position. The minimum in this waveform is then located and the timing window placed at that position.

The form of the quadratic function illustrated in Figure 9 will now be described. If $\tau$ denotes the timing of a received path with respect to the centre of the $T_g$-wide window within which perfect reception is obtained, then the proportions of the power of this path which contribute usefully or harmfully respectively may be determined by applying the following power-weighting functions. The wanted-component power-weighting function $W(\tau)$ is given as:

$$W(\tau) = 1, \ \text{ for } \ |\tau| \leq \frac{T_g}{2}$$

$$W(\tau) = 0, \ \text{ for } \ |\tau| \geq T_u + \frac{T_g}{2}$$

$$W(\tau) = \left( \frac{T_u + \frac{T_g}{2} - |\tau|}{T_u} \right)^2,$$

otherwise.

The unwanted-component ('damage') power-weighting function $U(\tau)$ is given as:

$$U(\tau) = 0, \ \text{ for } \ |\tau| \leq \frac{T_g}{2}$$

$$U(\tau) = 1, \quad \text{for } |\tau| \geq T_u + \frac{T_g}{2}$$

$$U(\tau) = \left(1 - \left(\frac{T_u + \frac{T_g}{2} - |\tau|}{T_u}\right)^2\right),$$

otherwise.

It will be seen that the side portions (of width $T_u$) of the weighting function are thus of quadratic form, i.e. dependent on $\tau^2$, and the weighting functions are complementary, i.e. $W(\tau)+U(\tau)=1$. This maximises the ratio of the total wanted-signal components to the total unwanted-signal components. It can be shown that this is achieved by minimising the total unwanted-signal component, i.e. minimising the 'damage done'.

Some departure from the precise formula is possible but the function used should retain the general form of a quadratic function.

The manner in which this is implemented in the preferred embodiment is as follows. A channel estimate is provided by the channel estimator circuit 72. This is first upsampled by a factor of two, and the time-interpolated pilots are packed next to each other in the array. For the DRM mode B this gives an upsampling factor of 1 to 4. An FFT is then performed on this data by the IFFT circuit 74, to give the estimated CIR, and the square of the magnitude is taken to give the PIR. This is then multiplied by the weighting function (based on Figure 9) in the weighting function circuit 76 at each possible window position, to give an array that contains a value indicating the 'damage done' in each window position. This may be considered expensive in terms of processing but, because of the simple form of the weighting function, this can be achieved with simple integrators. The output is also normalised by the total "mass" of the PIR to give values between zero and unity.

The power of paths that are outside of the guard interval are underestimated so the PIR is preferably additionally corrected to allow for this. This can be achieved by dividing the PIR by the wanted power curve of Figure 9, before using the PIR to calculate the damage waveform.

If there was a single path in the transmission channel a waveform would be obtained that looked like the unwanted power curve of Figure 9. There is a window of width equal to that of the guard interval where the function is zero, and no damage is done, as expected. The best location to place the timing window is with half a guard interval before and half a guard interval after, to allow for either later or earlier paths appearing. It is necessary, therefore, to find the centre point of the minimum region of this function. The whole of the minimum region should, in principle, be exactly equal to zero but because of noise and rounding errors in the calculation this will not be the case. Thus a threshold value should be chosen that is based on the minimum value of the array. This is achieved by the 'search for minimum damage' circuit 78 in Figure 2 and is illustrated in Figure 10.

As seen in Figure 10, the starting point for the minimum region is the first sample that is below the threshold, and the end point is the last sample in the array below the threshold. These values are then averaged to give the centre point of the minimum region.

Due to the upsample factor and the averaging of the start and end points, the position given by this algorithm has a resolution of 1/8 sample.

In summary, the post-FFT synchroniser seeks to determine the best window position by following these steps:

1. Do an FFT on the received pilot carriers in the DRM signal, which act as gain references, to give an estimated channel impulse response (CIR).
2. Take the magnitude of the CIR and square it to give an estimated power CIR (PIR).
3. Use the quadratic-form weighting function and the PIR to generate a waveform showing the damage done as a function of window position.
4. Find the minimum in this waveform and use this position as the input to the loop filter.

The bandwidth of the DRM signal (usually 10kHz) is much less than that for DVB-T (8MHz) which means the overall processing and storage requirements required are much less. This means that carrying out extra processing on the data to improve the time and frequency synchronisation after carrying out the FFT is a practical possibility for DRM.

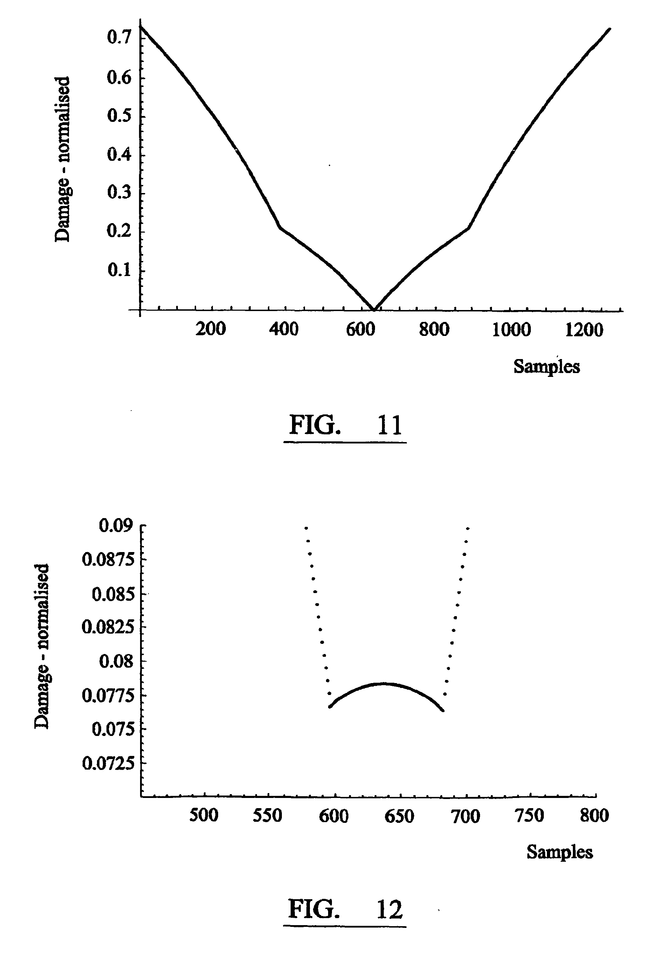

Some simple examples will now be considered. First, for a 0dB echo of less than a guard interval delay, the minimum region will be reduced in width. If the delay is now increased to exactly a guard interval, the waveform now reaches zero at just one point. This is shown in Figure 11. If the delay is then increased further, so that the delay is a little greater than a guard interval, the damage waveform now looks as indicated in Figure 12, where there are two minima and the waveform no longer reaches zero. It is still possible to apply a minimum search and find the width, which now is small for a well-chosen threshold value. In this situation the algorithm will place one path just inside the guard interval and the other just outside the guard interval, which is exactly the behaviour desired to cause the minimum damage. For two equal paths it is arbitrary which one is placed inside the guard interval. For two unequal paths the algorithm will place the bigger path in the guard interval.

An improvement to the post-FFT system will now be described. This involves tracking the history of the channel impulse response. In a situation where the channel conditions are changing, the timing control can be refined further. For example, considering the case of a 0dB echo located a guard interval from the main path, the timing control will place the two paths on each edge of the timing window. If the echo now fades, the control begins to move the first path towards the centre of the window. If the second path now re-appears it will be outside the timing window and will cause ISI. It depends how rapidly the path reappears as to how much damage it will cause. If it reappears slowly enough (i.e. slower than the bandwidth of the control loop) the ISI caused may not be too great. Therefore an improved algorithm would track paths as they come and go, and make decisions as to whether it should move the timing window or not based on the history of the paths. So for the simple example above, if the second path disappears and then reappears with regularity, the algorithm would not move the window.

The signal through the FFT 18 should preferably be corrected for any frequency error that may be present so that the imaginary part of the signal corresponding to the location of the guard interval is zero. Despite the AFC loop comprising circuits 22 and 16 in Figure 1 there may still be a residual frequency error. Thus, more processing is desirable to take the magnitude of the smoothed waveform before searching for the peak.

As just noted, because there may be a frequency error, strictly, the <u>magnitude</u> of the output from the smoother 44 should be taken before finding the peak. A simplified version of this can be employed in which the peak search in the circuit 46 operates on both the real and imaginary parts of the signal. The peak value from the smoother will be proportional to the width of the guard interval. The value from the peak detector should therefore preferably be normalised by the width of the guard interval before comparing the peak values.

The preferred embodiment described with reference to Figure 2 and the other figures has been found to operate effectively, placing the timing window in a position where ISI was insufficient to cause errors in the audio stream. The path just outside the guard interval window was sufficiently down on the total energy within the window such that any ISI was correctable by the multi-level DRM decoder. It is unlikely that a pre-FFT time synchronisation technique alone would be able to cope as well.

The system described avoids the need to set thresholds in the algorithms, and uses a more deterministic approach.

The techniques described are not only applicable to DRM. The pre-FFT synchronisation technique is applicable to any OFDM system that uses a guard interval, and the post-FFT synchronisation technique is applicable to any OFDM system where it is possible to obtain a channel impulse response.

Many modifications may be made to the system described above by way of example, within the scope of the appended claims. In particular, the various circuit elements shown as discrete components may be combined and may in part or in whole be implemented in software. In that event the system block diagrams should be regarded as being in the nature of flowcharts.

**Claims**

1. A method of receiving a many-carrier signal, the received many-carrier signal being of a type comprising a succession of symbol periods during each of which one bit or a plurality of bits is transmitted on each of a plurality of carriers, each total symbol period comprising an active symbol period and a guard interval, the method comprising the steps of:

   receiving a many-carrier signal of the said type;
   subjecting the received signal to a transformation from time domain to frequency domain;
   applying time synchronisation detection to the received signal before the transformation; and
   controlling the timing of the signals to be subjected to the transformation in dependence upon the time synchronisation detection;

wherein the time synchronisation detection comprises delaying the signal by the duration of the active symbol period, and correlating the delayed and undelayed signals to provide a correlation signal representing the result of the correlation;

**characterized in that** the time synchronization detection further comprises detecting the centre of mass of the pulses in the correlation signal.

2. A method according to claim 1, in which the correlation step comprises complex multiplication taking the complex conjugate of one of the inputs to the multiplication.

3. A method according to claim 1 or 2, in which the detecting step includes a filtering step to filter the resultant of the correlation.

4. A method according to claim 3, in which the filtering comprises filtering with a filter having an infinite impulse response.

5. A method according to claim 3 or 4, in which the detecting step comprises smoothing the filtered signal.

6. A method according to claim 5, in which the smoothing step comprises smoothing with a window substantially equal in length to the duration of the guard interval of the received signal.

7. A method according to claim 5 or 6, in which the smoothing step provides an output having a substantially triangular peak corresponding to the duration of the guard interval.

8. A method according to any of claims 1 to 7, in which the step of detecting the centre of mass comprises making a first detection of the centre of mass followed by a second detection of the centre of mass, the starting point for the second detection of the centre of mass being dependent upon the resultant of the first detection of the centre of mass.

9. A method according to any of claims 1 to 8, in which the time synchronisation detection includes a phase detection and the timing of the signals subjected to transformation is dependent upon the phase detection so as to tend to reduce any phase error.

10. A method according to any of claims 1 to 9, in which the received signal is an orthogonal frequency division multiplex signal.

11. A method according to claim 10, in which the received signal is a Digital Radio Mondiale signal.

12. A method according to any of claims 1 to 11, further comprising:

> applying a second time synchronisation detection to the received signal after the transformation; and
> controlling the timing of the signals to be subjected to the transformation in dependence upon the second time synchronisation detection;

wherein the time synchronisation detection comprises generating an estimated channel impulse response, and further comprises combining the estimated channel impulse response or a signal derived therefrom with a weighting function to generate a signal which is a measure of the damage done to the signal response as a function of window position, side portions of the weighting function being of quadratic form, and locating a minimum in the resultant waveform.

13. A method according to claim 12, in which the estimated channel impulse response is derived from pilot carriers in the received signal.

14. A method according to claim 12 or 13, in which the time synchronisation detection further comprises the step of squaring the estimated channel impulse response to provide an estimated power channel impulse response, and in which the estimated power channel impulse response is combined with the weighting function.

15. A method according to claim 14, further comprising the step of dividing the estimated power channel impulse response by a function representing the unwanted power in the signal.

16. A method according to any of claims 12 to 15, in which the locating step comprises detecting when the signal is below a predetermined threshold.

**17.** A method according to claim 16, in which the locating step further comprises detecting the first and last points at which the signal is below the threshold and determining the average of the said first and last points as the centre of a window position.

**18.** A method according to claim 17, in which the locating step includes taking account of the history of the result of previous locating steps.

**19.** Apparatus for receiving a many-carrier signal, the received many-carrier signal being of a type comprising a succession of symbol periods during each of which one bit or a plurality of bits is transmitted on each of a plurality of carriers, each total symbol period comprising an active symbol period and a guard interval, the apparatus comprising:

an input (12) for receiving a many-carrier signal of the said type;
transformation means (18) for subjecting the received signal to a tranformation from time domain to frequency domain;
a detector (28) for time synchronisation detection applied to the received signal before the transformation; and
a controller (32) for controlling the timing of the signals to be subjected to the transformation in dependence upon the time synchronisation detection;

wherein the time synchronisation detector (28) comprises a delay (50) for delaying the signal by the duration of the appropriate active symbol period, and a correlator (52) for correlating the delay and undelayed signals to provide a correlation signal representing the result of the correlation;
**characterized in that** the time synchronisation detector further comprises a detector (46) for detecting the centre of mass of the pulses in the correlation signal.

**20.** Apparatus according to claim 19, in which the detector (46) comprises means for making a first detection of the centre of mass followed by a second detection of the centre of mass, the starting point for the second detection of the centre of mass being dependent upon the resultant of the first detection of the centre of mass.

**21.** Apparatus according to claim 19 or 20, further comprising:

a second detector (30) for time synchronisation detection applied to the received signal after the transformation; and
a controller (32) for controlling the timing of the signals to be subjected to the transformation in dependence upon the second time synchronisation detection;

wherein the time synchronisation detection comprises a generator (72,74) for generating an estimated channel impulse response, a combiner (76) for combining the estimated channel impulse response with a weighting function to generate a signal which is a measure of the damage done to the signal response as a function of window position, side portions of the weighting function being of quadratic form, and locating means (78) for locating a minimum in the resultant waveform.

**Patentansprüche**

**1.** Verfahren zum Empfangen eines Mehrträgersignals, wobei das empfangene Mehrträgersignal von einem Typ ist, der eine Folge von Symbolperioden umfasst, während der jeweils ein oder mehrere Bits auf jedem aus mehreren Trägern übertragen wird, wobei jede Gesamtsymbolperiode eine aktive Symbolperiode und ein Schutzintervall aufweist, wobei das Verfahren die folgenden Schritte beinhaltet:

Empfangen eines Mehrträgersignals des genannten Typs;
Unterziehen des empfangenen Signals einer Zeitbereich-in-Frequenzbereich-Transformation;
Anwenden von Zeitsynchronisationserfassung auf das empfangene Signal vor der Transformation; und
Steuern des Timing der zu transformierenden Signale in Abhängigkeit von der Zeitsynchronisationserfassung;

wobei die Zeitsynchronisationserfassung das Verzögern des Signals um die Dauer der aktiven Symbolperiode und das Korrelieren der verzögerten und unverzögerten Signale beinhaltet, um ein Korrelationssignal zu erzeugen, das das Ergebnis der Korrelation repräsentiert;
**dadurch gekennzeichnet, dass** die Zeitsynchronisationserfassung ferner das Erfassen des Massezentrums der Impulse im Korrelationssignal beinhaltet.

2. Verfahren nach Anspruch 1, bei dem der Korrelationsschritt eine komplexe Multiplikation unter Einbeziehung der konjugiert komplexen Zahl von einem der Eingänge in die Multiplikation beinhaltet.

3. Verfahren nach Anspruch 1 oder 2, bei dem der Erfassungsschritt einen Filterschritt zum Filtern der Resultanten der Korrelation beinhaltet.

4. Verfahren nach Anspruch 3, bei dem die Filterung das Filtern mit einem Filter mit einer Infinite-Impulsantwort umfasst.

5. Verfahren nach Anspruch 3 oder 4, bei dem der Erfassungsschritt das Glätten des gefilterten Signals beinhaltet.

6. Verfahren nach Anspruch 5, wobei der Glättungsschritt das Glätten mit einem Fenster beinhaltet, dessen Länge im Wesentlichen gleich der Dauer des Schutzintervalls des empfangenen Signals ist.

7. Verfahren nach Anspruch 5 oder 6, bei dem der Glättungsschritt einen Ausgang mit einer im Wesentlichen dreiek-kigen Spitze entsprechend der Dauer des Schutzintervalls erzeugt.

8. Verfahren nach einem der Ansprüche 1 bis 7, bei dem der Schritt des Erfassens des Massezentrums die Ausführung einer ersten Erfassung des Massezentrums gefolgt von einer zweiten Erfassung des Massezentrums beinhaltet, wobei der Anfangspunkt für die zweite Erfassung des Massezentrums von der Resultanten der ersten Erfassung des Massezentrums abhängig ist.

9. Verfahren nach einem der Ansprüche 1 bis 8, bei dem die Zeitsynchronisationserfassung eine Phasenerfassung beinhaltet und das Timing der transformierten Signale von der Phasenerfassung abhängig ist, um Phasenfehler zu reduzieren.

10. Verfahren nach einem der Ansprüche 1 bis 9, bei dem das empfangene Signal ein OFDM-(Orthogonal Frequency Division Multiplex)-Signal ist.

11. Verfahren nach Anspruch 10, bei dem das empfangene Signal ein DRM-(Digital Radio Mondiale)-Signal ist.

12. Verfahren nach einem der Ansprüche 1 bis 11, das ferner Folgendes beinhaltet:

   Anwenden einer zweiten Zeitsynchronisationserfassung auf das empfangene Signal nach der Transformation; und
   Steuern des Timing der zu transformierenden Signale in Abhängigkeit von der zweiten Zeitsynchronisationserfassung;

   wobei die Zeitsynchronisationserfassung das Erzeugen einer geschätzten Kanalimpulsantwort und ferner das Kombinieren der geschätzten Kanalimpulsantwort oder eines davon abgeleiteten Signals mit einer Gewichtungsfunktion, um ein Signal zu erzeugen, das ein Maß für den Schaden an der Signalantwort in Abhängigkeit von der Fensterposition ist, wobei Seitenteile der Gewichtungsposition eine quadratische Form haben, und das Orten eines Minimums der resultierenden Wellenform beinhaltet.

13. Verfahren nach Anspruch 12, bei dem die geschätzte Kanalimpulsantwort von Pilotträgern in dem empfangenen Signal abgeleitet wird.

14. Verfahren nach Anspruch 12 oder 13, bei dem die Zeitsynchronisationserfassung ferner den Schritt des Quadrierens der geschätzten Kanalimpulsantwort beinhaltet, um eine geschätzte Leistungskanalimpulsantwort zu erzeugen, und bei dem die geschätzte Leistungskanalimpulsantwort mit der Gewichtungsfunktion kombiniert wird.

15. Verfahren nach Anspruch 14, das ferner den Schritt des Dividierens der geschätzten Leistungskanalimpulsantwort durch eine Funktion beinhaltet, die die unerwünschte Leistung in dem Signal repräsentiert.

16. Verfahren nach einem der Ansprüche 12 bis 15, bei dem der Ortungsschritt das Erfassen beinhaltet, wann das Signal unter einem vorbestimmten Schwellenwert ist.

17. Verfahren nach Anspruch 16, bei dem der Ortungsschritt ferner das Erfassen des ersten und des letzten Punktes, an dem das Signal unter dem Schwellenwert ist, und das Ermitteln der genannten ersten und letzten Punkte als die Mitte einer Fensterposition beinhaltet.

18. Verfahren nach Anspruch 17, bei dem der Ortungsschritt die Berücksichtigung der Historie des Ergebnisses der vorherigen Ortungsschritte beinhaltet.

19. Vorrichtung zum Empfangen eines Mehrträgersignals,
wobei das empfangene Mehrträgersignal von einem Typ ist, der eine Folge von Symbolperioden umfasst, während der jeweils ein oder mehrere Bits auf jedem aus der Mehrzahl von Trägern übertragen wird/werden, wobei jede Gesamtsymbolperiode eine aktive Symbolperiode und ein Schutzintervall umfasst, wobei die Vorrichtung Folgendes umfasst:

einen Eingang (12) zum Empfangen eines Mehrträgersignals des genannten Typs;
ein Transformationsmittel (18), um das empfangene Signal einer Zeitbereich-in-Frequenzbereich-Transformation zu unterziehen;
einen Detektor (28) zur Zeitsynchronisationserfassung, die vor der Transformation auf das empfangene Signal angewandt wird; und
eine Steuerung (32) zum Steuern des Timing der zu transformierenden Signale in Abhängigkeit von der Zeitsynchronisationserfassung;

wobei der Zeitsynchronisationsdetektor (28) ein Verzögerungsglied (50) zum Verzögern des Signals um die Dauer der geeigneten aktiven Symbolperiode und einen Korrelator (52) zum Korrelieren der verzögerten und der unverzögerten Signale umfasst, um ein Korrelationssignal zu erzeugen, das das Ergebnis der Korrelation repräsentiert; **dadurch gekennzeichnet, dass** der Zeitsynchronisationsdetektor ferner einen Detektor (46) zum Erfassen des Massezentrums der Impulse im Korrelationssignal umfasst.

20. Vorrichtung nach Anspruch 19, bei der der Detektor (46) Mittel umfasst, um eine erste Erfassung des Massezentrums gefolgt von einer zweiten Erfassung des Massezentrums durchzuführen, wobei der Anfangspunkt für die zweite Erfassung des Massezentrums von der Resultanten der ersten Erfassung des Massezentrums abhängig ist.

21. Vorrichtung nach Anspruch 19 oder 20, die ferner Folgendes umfasst:

einen zweiten Detektor (30) zur Zeitsynchronisationserfassung, die auf das empfangene Signal nach der Transformation angewendet wird; und
eine Steuerung (32) zum Steuern des Timing der zu transformierenden Signale in Abhängigkeit von der zweiten Zeitsynchronisationserfassung;

wobei die Zeitsynchronisationserfassung einen Generator (72, 74) zum Erzeugen einer geschätzten Kanalimpulsantwort, einen Combiner (76) zum Kombinieren der geschätzten Kanalimpulsantwort mit einer Gewichtungsfunktion zum Erzeugen eines Signals, das ein Maß für den Schaden an der Signalantwort in Abhängigkeit von der Fensterposition ist, wobei Seitenteile der Gewichtungsfunktion eine quadratische Form aufweisen, und ein Ortungsmittel (78) zum Orten eines Minimums in der resultierenden Wellenform umfasst.

**Revendications**

1. Procédé de réception d'un signal à porteuses multiples, le signal à porteuses multiples reçu étant d'un type comprenant une succession de périodes de symboles durant chacune desquelles un bit ou une pluralité de bits est transmis sur chacune d'une pluralité de porteuses, chaque période de symbole totale comprenant une période de symbole active et un intervalle de garde, le procédé comprenant les étapes suivantes:

réception d'un signal à porteuses multiples dudit type ;
soumission du signal reçu à une transformation du domaine temporel au domaine fréquentiel ;
application d'une détection de synchronisation temporelle au signal reçu avant la transformation ; et
commande du cadencement des signaux à soumettre à la transformation en fonction de la détection de synchronisation temporelle ;

dans lequel la détection de synchronisation temporelle comprend le retard du signal par la durée de la période de symbole active, et la mise en corrélation des signaux retardés et non retardés afin de fournir un signal de corrélation représentant le résultat de la corrélation ;
**caractérisé en ce que** la détection de synchronisation temporelle comprend en outre la détection du centre de masse des impulsions dans le signal de corrélation.

2. Procédé selon la revendication 1, dans lequel l'étape de corrélation comprend une multiplication complexe utilisant la conjuguée complexe de l'une des entrées de la multiplication.

3. Procédé selon la revendication 1 ou 2, dans lequel l'étape de détection comporte une étape de filtrage afin de filtrer la résultante de la corrélation.

4. Procédé selon la revendication 3, dans lequel le filtrage comprend le filtrage avec un filtre ayant une réponse impulsionnelle infinie.

5. Procédé selon la revendication 3 ou 4, dans lequel l'étape de détection comprend le lissage du signal filtré.

6. Procédé selon la revendication 5, dans lequel l'étape de lissage comprend le lissage avec une fenêtre sensiblement égale en longueur à la durée de l'intervalle de garde du signal reçu.

7. Procédé selon la revendication 5 ou 6, dans lequel l'étape de lissage fournit une sortie ayant un pic sensiblement triangulaire correspondant à la durée de l'intervalle de garde.

8. Procédé selon l'une quelconque des revendications 1 à 7, dans lequel l'étape de détection du centre de masse comprend la réalisation d'une première détection du centre de masse suivie d'une seconde détection du centre de masse, le point de départ de la seconde détection du centre de masse dépendant de la résultante de la première détection du centre de masse.

9. Procédé selon l'une quelconque des revendications 1 à 8, dans lequel la détection de synchronisation temporelle comporte une détection de phase et le cadencement des signaux soumis à la transformation dépend de la détection de phase de façon à tenter de réduire toute erreur de phase.

10. Procédé selon l'une quelconque des revendications 1 à 9, dans lequel le signal reçu est un signal de multiplexage par répartition orthogonale de la fréquence.

11. Procédé selon la revendication 10, dans lequel le signal reçu est un signal Digital Radio Mondiale.

12. Procédé selon l'une quelconque des revendications 1 à 11, comprenant en outre :

l'application d'une seconde détection de synchronisation temporelle au signal reçu après la transformation ; et la commande du cadencement des signaux à soumettre à la transformation en fonction de la seconde détection de synchronisation temporelle ;

dans lequel la détection de synchronisation temporelle comprend la génération d'une réponse impulsionnelle de canal estimée, et comprend en outre la combinaison de la réponse impulsionnelle de canal estimée ou d'un signal dérivé de celle-ci avec une fonction de pondération afin de générer un signal qui est une mesure de l'endommagement causé à la réponse de signal en fonction de la position de la fenêtre, des parties latérales de la fonction de pondération étant de forme quadratique, et la localisation d'un minimum dans la forme d'onde résultante.

13. Procédé selon la revendication 12, dans lequel la réponse impulsionnelle de canal estimée est dérivée de porteuses pilotes dans le signal reçu.

14. Procédé selon la revendication 12 ou 13, dans lequel la détection de synchronisation temporelle comprend en outre l'étape de mise au carré de la réponse impulsionnelle de canal estimée afin de fournir une réponse impulsionnelle de canal de puissance estimée, et
dans lequel la réponse impulsionnelle de canal de puissance estimée est combinée à la fonction de pondération.

**15.** Procédé selon la revendication 14, comprenant en outre l'étape de division de la réponse impulsionnelle de canal de puissance estimée par une fonction représentant la puissance non voulue dans le signal.

**16.** Procédé selon l'une quelconque des revendications 12 à 15, dans lequel l'étape de localisation comprend la détection du moment où le signal est inférieur à un seuil prédéterminé.

**17.** Procédé selon la revendication 16, dans lequel l'étape de localisation comprend en outre la détection des premier et dernier points auxquels le signal est inférieur au seuil et la détermination de la moyenne desdits premier et dernier points comme centre d'une position de fenêtre.

**18.** Procédé selon la revendication 17, dans lequel l'étape de localisation comporte la prise en compte de l'historique du résultat d'étapes de localisation antérieures.

**19.** Appareil de réception d'un signal à porteuses multiples, le signal à porteuses multiples reçu étant d'un type comprenant une succession de périodes de symboles durant chacune desquelles un bit ou une pluralité de bits est transmis sur chacune d'une pluralité de porteuses, chaque période de symbole totale comprenant une période de symbole active et un intervalle de garde, l'appareil comprenant :

une entrée (12) pour recevoir un signal à porteuses multiples dudit type ;
un moyen de transformation (18) pour soumettre le signal reçu à une transformation du domaine temporel au domaine fréquentiel ;
un détecteur (28) pour une détection de synchronisation temporelle appliquée au signal reçu avant la transformation ; et
un contrôleur (32) pour commander le cadencement des signaux à soumettre à la transformation en fonction de la détection de synchronisation temporelle ;

dans lequel le détecteur de synchronisation temporelle (28) comprend un retard (50) pour retarder le signal par la durée de la période de symbole active, et un corrélateur (52) pour mettre en corrélation les signaux retardés et non retardés afin de fournir un signal de corrélation représentant le résultat de la corrélation ;
**caractérisé en ce que** le détecteur de synchronisation temporelle comprend en outre un détecteur (46) pour détecter le centre de masse des impulsions dans le signal de corrélation.

**20.** Appareil selon la revendication 19, dans lequel le détecteur (46) comprend un moyen pour réaliser une première détection du centre de masse suivie d'une seconde détection du centre de masse, le point de départ de la seconde détection du centre de masse dépendant de la résultante de la première détection du centre de masse.

**21.** Appareil selon la revendication 19 ou 20, comprenant en outre :

un second détecteur (30) pour une détection de synchronisation temporelle appliquée au signal reçu après la transformation ; et
un contrôleur (32) pour commander le cadencement des signaux à soumettre à la transformation en fonction de la seconde détection de synchronisation temporelle ;

dans lequel la détection de synchronisation temporelle comprend un générateur (72, 74) pour générer une réponse impulsionnelle de canal estimée, un circuit de combinaison (76) pour combiner la réponse impulsionnelle de canal estimée avec une fonction de pondération afin de générer un signal qui est une mesure de l'endommagement causé à la réponse de signal en fonction de la position de la fenêtre, des parties latérales de la fonction de pondération étant de forme quadratique, et un moyen de localisation (78) pour localiser un minimum dans la forme d'onde résultante.

FIG. 1

FIG. 2

SYMBOL N     SYMBOL N + 1     SYMBOL N + 2

(a)

SYMBOL N - 1     SYMBOL N     SYMBOL N + 1

(b)

(c)    0-

FIG. 3

EP 1 387 544 B1

FIG. 4

EP 1 387 544 B1

FIG. 5

FIG. 6

FIG. 7

FIG. 8

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 02250062 A
- EP 1221793 A
- EP 300744 A
- US 20020065047 A
- EP 896457 A

### Non-patent literature cited in the description

- **JONATHAN STOTT.** DRM-Key technical features. *Technical Review,* March 2001